# EUROPEAN PATENT SPECIFICATION

(11) **EP 1 997 202 B1**
(45) Date of publication and mention of the grant of the patent: **11.09.2013**
(21) Application number: 07711262.1
(22) Date of filing: 09.03.2007
(51) Int. Cl.: H02H 5/04, H02H 7/085

(54) **ELECTRO-MECHANICAL ACTUATOR SYSTEM, FOR INSTANCE FOR ADJUSTABLE FURNITURE**
ELEKTROMECHANISCHES AKTORSYSTEM ZUM BEISPIEL FÜR EINSTELLBARE MÖBEL
SYSTEME D'ACTIONNEUR ELECTRO-MECANIQUE, POUR MOBILIER REGLABLE PAR EXEMPLE

(30) Priority: 09.03.2006 DK 200600335
(43) Date of publication of application: 03.12.2008
(73) Proprietor: LINAK A/S, DK-6430 Nordborg (DK)
(72) Inventor: BASTHOLM, Jeppe Christian, DK-6400 Sønderborg (DK)
(74) Representative: Pedersen, Soeren Skovgaard
(86) International application number: PCT/DK2007/000119
(87) International publication number: WO 2007/101446

(56) References cited:
- DE-U1- 20 008 192
- JP-A- 55 146 954
- US-A1- 2003 210 011

## Description

The present invention relates to an electro-mechanical actuator system for instance for adjustable furniture as stated in the preamble of claim 1. This type of actuator systems is for instance known from WO 02/29284 A1 to Linak A/S, WO 01/17401 A1 to Linak A/S and WO89/10715 A1 to Dewert concerning a linear, a rotary- and a dual actuator, respectively. Actuator systems especially for height-adjustable tables are also known, cf. for example WO 02/39848 A1 to Linak A/S and EP 1 079 511 A1 to Linak A/S, concerning a linear actuator and a power supply/control unit, respectively.

In recent years a marked interest for electrically adjustable furniture has arisen followed by a parallel product development to reduce the prices of the furniture to a price level making them available to the common man.

To comply with the demand for price reductions of the products, the recognition that the furniture is only occasionally adjusted and the fact that the actual adjustment is quite rapidly done, is being utilized. On these grounds, power supplies and motors are chosen, which at the prescribed maximum load of the furniture are loaded to absolute maximum performance, and a brief overload is even permitted. Hereby, smaller and more inexpensive low-voltage DC-motors and power supplies can be chosen. In return a duty cycle is introduced, which means that the actuator is only permitted to run for a certain amount of time in the course on an hour. A duty cycle of for instance 10 means that the actuator can only run for 6 minutes in the course of an hour to prevent superheating.

As a safety measure a thermal fuse, which cuts off the current to the motor if the temperature exceed a predetermined critical temperature is often mounted in connection with the transformer, cf. for instance DE 200 08 192 U1. A problem with thermal fuses is that successive damages can be inflicted on the rest of the control unit before the fuse is activated.

The purpose of the invention is to provide a more accurate and effective protection from superheating.

This is achieved according to the invention in that the electro-mechanical actuator system is constructed according to claim 1, where the power supply and/or the electric control unit comprises at least one thermal diode, where the voltage is inverse proportional to the temperature and calibrated so that a given voltage is converted into a given temperature, and where the control unit is arranged so that the current for the motor of the actuator is cut off at a predetermined critical temperature. Diodes are small, inexpensive and relatively accurate components which can be mounted on a circuit board, and they can be located where the temperature conditions are expected to be critical. To begin with, it is decisive that the current for the motors are cut off if a superheating should occur, so that successive damages also to the actuator system are avoided. It is of course not possible to know exactly why a superheating of the actuator system has occurred but unlike the thermal fuse it is possible to gather certain information as to where in the system the superheating has occurred. It is noted that superheating is also here registered as a result of mechanically developed heat, and thermal diodes can deliberately be placed accordingly.

In an embodiment the voltage over the diode is not directly used, but is used for a pulse generator which is traced by a micro processor. However the voltage over the diode still determines the cyclic time. A long period corresponds to a low temperature while a short period corresponds to a high temperature. The micro processor measures the cyclic time at start-up (for instance tests during production), and uses it as basis. The temperature is hereafter calculated as a change in the cyclic time. The basic defects and the variations of the diodes are hereby removed from the tracing system.

A special advantage by the invention is that a random number of diodes can be coupled in parallel, which in that way provides more measuring points - an extra measuring point is merely a diode at a moderate cost. It is of course not possible to distinguish between the individual diodes but normally it does not matter where the system is too hot as it will shut down anyhow.

An embodiment for the invention will be explained more fully below with reference to the accompanying drawing, in which:

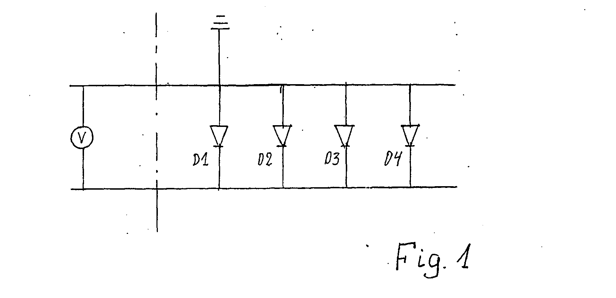

Fig. 1, shows a diagram of a embodiment according to the invention.

The embodiment shown in the drawing comprises four diodes D1,D2,D3,D4, arranged in parallel, connected to a power source and connected with a multimeter. The diodes are located strategically in the actuator system, where the system is traditionally known to be superheated as a result of overload, also as a result of defects. Such a strategic location can for instance be in connection with FET-transistors for controlling the actuator. If the area surrounding for instance the diode D2 becomes hotter than the area surrounding the other diodes, the voltage will fall as a result of the fact that the resistance in the diodes falls. This is recorded by the multimeter V, and on the basis of this signal the current for the motor can be cut off.

Though the description of the invention departs in furniture, it is evident, that the invention can be used in connection with other applications of actuator systems.

## Claims

1. Electro-mechanical actuator system, for instance for adjustable furniture, where at least one adjustable element is embedded in a stationary part and where the actuator system comprises at least one actuator for effecting the adjustment of the adjustable element, where the actuator comprises a housing, a reversible DC-motor, a transmission, an activation element, where the housing is mounted to the stationary part and the activation element to the adjustable part or vice versa, a power supply for the DC-motor, an electric control unit, and a control connected to the control unit, **characterized in,**
**that** the power supply and/or the electric control unit comprises at least one thermal diode where the voltage is inverse proportional to the temperature and calibrated so that a given voltage is converted into a given temperature and where the control unit is arranged so that the current for the motor of the actuator is cut off at a predetermined critical temperature.

2. Electro-mechanical actuator system according to claim 1, **characteri zed** in, that the voltage over the diode is used for a pulse generator which is traced by a micro processor and where the pulses are used for determining the temperature.

3. Electro-mechanical actuator system according to claim 2, **characteri zed** in, that a long period corresponds to a low temperature while a short period corresponds to a high temperature.

4. Electro-mechanical actuator system according to claim 3, **characteri zed** in, that the micro processor at start-up, for instance tests during production, measures the cyclic time and uses it as basis, and the temperature is, hereafter, calculated as a change in the cyclic time.

## Patentansprüche

1. Elektro-mechanisches Stellsystem, zum Beispiel für ver- oder einstellbare Möbel, wobei mindestens ein ver- oder einstellbares Element in ein stationäres Teil eingebaut ist und wobei das Stellsystem mindestens ein Stellglied zum Bewirken der Ver- oder Einstellung des einstellbaren Elements umfasst, wobei das Stellglied ein Gehäuse, einen umkehrbaren Gleichstrom-Motor, eine Transmission, ein Betätigungselement umfasst, wobei das Gehäuse an dem stationären Teil und das Betätigungselement an dem einstellbaren Teil angebracht ist oder umgekehrt; sowie eine Energieversorgung für den Gleichstrom-Motor, eine elektrische Steuereinheit und eine mit der Steuereinheit verbundene Steuerung umfasst, **dadurch gekennzeichnet, dass** die Energieversorgung und / oder die elektrische Steuereinheit wenigstens eine Wärmediode umfasst/en, wobei die Spannung umgekehrt proportional zur Temperatur und so abgeglichen ist, dass eine bestimmte Spannung in eine bestimmte Temperatur gewandelt wird, und wobei die Steuereinheit so angeordnet ist, dass der Strom für den Motor des Stellglieds bei einer vorbestimmten Grenz- oder kritischen Temperatur abgeschaltet wird.

2. Elektro-mechanisches Stellsystem nach Anspruch 1, **dadurch gekennzeichnet, dass** die Spannung über der Diode für einen Impuls - Generator verwendet wird, der von einem Mikroprozessor verfolgt bzw. verwertet wird und wobei die Impulse zur Bestimmung der Temperatur verwendet werden.

3. Elektro-mechanisches Stellsystem nach Anspruch 2, **dadurch gekennzeichnet, dass** eine lange Periode einer niedrigen Temperatur entspricht, während eine kurze Periode einer hohen Temperatur entspricht.

4. Elektro-mechanisches Stellsystem nach Anspruch 3, **dadurch gekennzeichnet, dass** der Mikroprozessor beim Anlaufen bzw. bei der Inbetriebnahme, beispielsweise bei der Erprobung / Prüfung während der Fertigung, die Zykluszeit misst und als Basis verwendet, und dass die Temperatur danach als Veränderung in der Zykluszeit berechnet wird.

## Revendications

1. Système d'actionneur électromécanique, par exemple pour mobilier réglable, dans lequel au moins un élément réglable est imbriqué dans une partie immobile et dans lequel le système d'actionneur comprend au moins un actionneur pour effectuer le réglage de l'élément réglable, dans lequel l'actionneur comprend un boîtier, un moteur CC réversible, une transmission, un élément d'activation, dans lequel le boîtier est monté sur la partie immobile et l'élément d'activation sur la partie réglable ou vice-versa, une source d'alimentation pour le moteur CC, une unité de commande électrique et une commande raccordée à l'unité de commande,
**caractérisé en ce que** :
l'alimentation électrique et/ou l'unité de commande électrique comprend ou comprennent au moins une diode thermique, dans lequel la tension est inversement proportionnelle à la température et étalonnée de sorte qu'une tension donnée soit convertie en une température donnée et dans lequel l'unité de commande est aménagée de sorte que le courant du moteur de l'actionneur soit coupé à une température critique prédéterminée.

2. Système d'actionneur électromécanique selon la revendication 1, **caractérisé en ce que** la tension aux bornes de la diode est utilisée pour un générateur d'impulsions qui est suivi par un microprocesseur et dans lequel les impulsions sont utilisées pour déterminer la température.

3. Système d'actionneur électromécanique selon la revendication 2, **caractérisé en ce qu'**une longue période correspond à une faible température tandis qu'une courte période correspond à une température élevée.

4. Système d'actionneur électromécanique selon la revendication 3, **caractérisé en ce que** le microprocesseur au départ, par exemple lors de tests en cours de production, mesure le temps cyclique et l'utilise comme base et la température est ensuite calculée en fonction d'une variation dans le temps cyclique.
